# EUROPÄISCHE PATENTANMELDUNG

(11) **EP 3 487 127 A1**
(43) Veröffentlichungstag der Anmeldung: **22.05.2019**
(21) Anmeldenummer: 17202075.2
(22) Anmeldetag: 16.11.2017
(51) Int. Cl.: H04L 12/58, G06Q 30/02

(54) **VERFAHREN UND VORRICHTUNG ZUR ANALYSE UND VERARBEITUNG VON ELEKTRONISCHEN NACHRICHTEN**

(71) Anmelder: GFK SE, 90419 Nürnberg (DE)
(72) Erfinder: THOLE, Henning, 71665 Vaihingen/Enz (DE)
(74) Vertreter: Jeck, Anton

(57) **Zusammenfassung**

Die vorliegende Erfindung betrifft ein Verfahren, ein System, ein Computerprogrammprodukt sowie ein Computerprogramm zur Analyse und Verarbeitung von elektronischen Nachrichten/Daten, wobei mindestens ein Teil mindestens einer bezogenen Nachricht (Daten) mit einer White-List abgeglichen wird, wobei eine Übereinstimmung oder Nicht-Übereinstimmung der mindestens einen Nachricht mit der White-List festgestellt wird, wobei eine Übermittlungsanfrage bezüglich der mindestens einen Nachricht mit Übereinstimmung, insbesondere an den Empfänger der mindestens einen Nachricht, gesendet wird und wobei die Nachricht mit Übereinstimmung an einen Server zur weiteren Analyse der Inhalte der Nachricht übermittelt wird, soweit eine Übermittlungserlaubnis erteilt wurde.

## Beschreibung

Die vorliegende Erfindung betrifft ein Verfahren zur Analyse und Verarbeitung von elektronischen Nachrichten gemäß Anspruch 1, ein Computerprogramm gemäß Anspruch 9, ein Computerprogrammprodukt gemäß Anspruch 10 sowie ein System zur Analyse und Verarbeitung von mindestens einer elektronischen Nachricht gemäß dem Oberbegriff des Anspruchs 11.

Bei einem solchen Verfahren werden grundsätzlich elektronische Nachrichten und/oder Daten empfangen und an einen Server weitergeleitet.

Das Computerprogramm ist grundsätzlich mit Programmcode-Mitteln gebildet, welche zum einen die Ausführung der Verfahrensschritte gemäß den Ansprüchen 1 bis 8 ermöglicht, wenn das Programm auf einer Datenverarbeitungsvorrichtung ausgeführt wird. Zum anderen kann das ausgeführte Computerprogramm Teil des Systems zur Analyse und Verarbeitung von mindestens einer elektronischen Nachricht gemäß Anspruch 11 sein.

Das Computerprogrammprodukt ist grundsätzlich mit Programmcode-Mitteln gebildet, die auf einem computerlesbaren Speichermedium gespeichert sind und ausgebildet sind, zum einen das Verfahren nach einem beliebigen der Ansprüche 1 bis 8 durchzuführen, wenn das Computerprogrammprodukt auf einer Datenverarbeitungsvorrichtung ausgeführt wird. Zum anderen kann das ausgeführte Computerprogrammprodukt Teil des Systems zur Analyse und Verarbeitung von mindestens einer elektronischen Nachricht gemäß Anspruch 11 sein.

Ein entsprechendes System weist zumindest eine Datenverarbeitungsanlage mit einem Prozessor und einem prozessorverbundenen Speicher, insbesondere einen Computer, ein Tablet oder ein Smartphone, auf, wobei das Gerät ausgebildet ist, die mindestens eine elektronische Nachricht zu empfangen.

Das erfindungsgemäße Verfahren, das erfindungsgemäße System, das erfindungsgemäße Computerprogramm sowie das erfindungsgemäße Computerprogrammprodukt, nachfolgend auch Erfindung genannt, können grundsätzlich eingesetzt werden, elektronische Nachrichten von mindestens einem Benutzer des Verfahrens, des Systems, des Computerprogramms und/oder des Computerprogrammprodukts auf ihren Inhalt hin zu überprüfen und so relevante Nachrichten von solchen Nachrichten zu trennen, welche für einen nachfolgende Auswertung irrelevant sind.

Die vorliegende Erfindung ist insbesondere für die Marktanalyse von Verbrauchern einsetzbar, wobei der Verbraucher die Erfindung benutzen kann, Nachrichten beziehungsweise Daten für eine Marktanalyse zu sammeln bzw. an einen Server zu übermitteln, auf welchem die Marktanalyse durchführbar ist. Erfindungsgemäß können Nachrichten und Daten synonym für bereitgestellte Informationen verwendet sein. Der Benutzer der vorliegenden Erfindung kann also beispielsweise Teil eines Marktanalyseprojekts sein, bei welchem er Informationen zu seinem Kaufverhalten, insbesondere in Form von elektronischen Nachrichten, wie beispielsweise E-Mails zu Kaufbestätigungen von bestellten bzw. gekauften Artikeln, Rechnungen oder Versandmitteilungen, an den besagten Server übermittelt/bereitstellt. Grundsätzlich kann sich hierbei die Frage der Datensicherheit sowie der Privatsphäre des Benutzers stellen.

Bekannte Systeme zur Erfassung von marktanalyserelevanten elektronischen Nachrichten haben beispielsweise direkten (Server-)Zugriff auf die elektronischen Nachrichten von Verbrauchern/Benutzern. Dieser kann insbesondere in Form eines Zugriffs auf den Posteingangsserver des E-Mailaccounts eines Verbrauchers vorliegen, wobei der Benutzer die E-Mails letztlich nicht von seinem eigenen Posteingangsserver sondern von einem zwischen Posteingangsserver und Benutzer geschalteten Server abruft, welcher von Dritten betrieben wird. Durch solche Systeme gelangt unkontrolliert und ungefiltert jegliche Information/Nachricht aus dem Posteingangsserver des Verbrauchers in die Hände derjenigen Partei, welche den direkten Zugriff auf den Posteingangsserver des Verbrauchers hat. Insbesondere aufgrund des Datenschutzes sowie der Privatsphäre des Verbrauchers kann dies als nachteilig empfunden werden.

Die vorliegende Erfindung stellt sich die Aufgabe, ein Verfahren, ein System, ein Computerprogramm sowie ein Computerprogrammprodukt zur Verfügung zu stellen, welche es dem Inhaber von elektronischen Nachrichten ermöglichen, insbesondere als Teilnehmer eines Marktanalyseprojekts Einfluss auf den Umfang der Analyse seiner Daten, insbesondere seiner elektronischen Nachrichten, zu nehmen.

Erfindungsgemäß wird diese Aufgabe durch ein Verfahren gemäß Anspruch 1, durch ein System nach Anspruch 11, durch ein Computerprogramm gemäß Anspruch 9 sowie durch ein Computerprogramm gemäß Anspruch 10 gelöst.

Bevorzugte Ausführungsformen der vorliegenden Erfindung sind in den abhängigen Ansprüchen, der Beschreibung sowie den Zeichnungen offenbart.

Das erfindungsgemäße Verfahren ist dadurch gekennzeichnet, dass mindestens ein Teil mindestens einer bezogenen Nachricht mit einer White-List abgeglichen wird, dass eine Übereinstimmung oder Nicht-Übereinstimmung der mindestens einen Nachricht mit der White-List festgestellt wird, dass eine Übermittlungsanfrage bezüglich der mindestens einen Nachricht mit Übereinstimmung, insbesondere an den Empfänger der mindestens einen Nachricht, gesendet wird, und dass die Nachricht mit Übereinstimmung an einen Server zur weiteren Analyse der Inhalte der Nachricht übermittelt wird, soweit eine Übermittlungserlaubnis erteilt wurde.

Vorzugsweise wird erfindungsgemäß ein computerimplementiertes Verfahren beziehungsweise ein von einem Computer ausgeführtes Verfahren, insbesondere mindestens einen der Schritte gemäß dem Verfahren nach einem der Ansprüche 1 bis 8 aufweisend, beansprucht.

Ein erster Grundgedanke der vorliegenden Erfindung besteht darin, ein computerimplementiertes Verfahren, insbesondere nach Anspruch 1, bereitzustellen, mittels welchem der Empfänger von elektronischen Nachrichten Einfluss auf den Zugriff Dritter auf seine Nachrichten ausüben kann. Dies kann erfindungsgemäß dadurch geschehen, dass an ihn gerichtete Nachrichten auf ihre Relevanz hin überprüft werden und der Empfänger, welcher insbesondere ein Verbraucher oder Benutzer des Verfahrens sein kann, eine Weiterleitung der Nachrichten an einen Server jeweils autorisiert oder verweigert. Hierdurch kann einem unbegrenzten Zugriff auf private elektronisehe Nachrichten vorgebeugt werden. Der Empfänger der Nachrichten kann insbesondere an einer Marktforschungs- bzw. Marktanalysestudie teilnehmen und sich dazu bereit erklärt haben, Informationen, beispielsweise zu seinem Kaufverhalten oder sonstigen elektronisch erfassbaren Aktivitäten, vorzugsweise seinem Kaufverhalten oder seinen Interessensgebieten, mit einem Marktforschungsunternehmen zu teilen und an dieses weiterzuleiten. Hierfür wird ein Zugriff des Marktforschungsunternehmens auf die für die Marktforschungsstudie erforderlichen Informationen, insbesondere in Form von elektronischen Nachrichten, wie beispielsweise E-Mails, Popups in Internetbrowserfenstern, elektronische Einschreiben, Push-Nachrichten, dargestellte Internetseiten oder sonstige relevante Informationen zum digitalen Verhalten des Teilnehmers an der Studie, benötigt. Gemäß der vorliegenden Erfindung soll zum einen ein sicherer Zugriff auf Nachrichten des Benutzers durch beispielsweise das Marktforschungsunternehmen ermöglicht werden, zum anderen soll die Akzeptanz und Bereitwilligkeit der Teilnehmer gefördert werden, Informationen, Daten und/oder Nachrichten zu teilen beziehungsweise an den Server weiterzuleiten.

Der erfindungsgemäß beanspruchte Abgleich der bezogenen elektronischen Nachricht mit einer White-List kann insbesondere ein Vergleich bestimmter Inhalte der elektronischen Nachricht mit einer angelegten Liste darstellen. Diese Liste kann beispielsweise E-Mail-Adressen von Sendern, wie beispielsweise online-Shops oder sonstigen für eine Marktanalyse relevanten Versendern von elektronischen Nachrichten, aufweisen. Erfindungsgemäß soll die White-List jedoch nicht lediglich als eine Liste verstanden werden sondern umfasst auch jegliche Algorithmen bzw. Methoden, die dazu geeignet sind, eine Relevanz beziehungsweise eine Unterscheidbarkeit zwischen elektronischen Nachrichten, insbesondere hinsichtlich eines Marktforschungsprojekts, festzustellen. Grundsätzlich kann die White-List Merkmale von elektronischen Nachrichten aufweisen, die an den Server weitergeleitet werden sollen. Die White-List kann jedoch auch ausschließende Merkmale von elektronischen Nachrichten aufweisen, sollte es erwünscht sein, elektronische Nachrichten mit bestimmtem Inhalt von einer Weiterleitung auszuschließen.

Die White-List kann sowohl auf einer Datenverarbeitungsanlage, insbesondere einem prozessorverbundenen Speicher, beziehungsweise an einem für ein Computerprogrammprodukt lesbaren Teil des Speichers abgelegt sein. Prozessorverbunden kann in diesem Zusammenhang insbesondere einen ermöglichten Datenaustausch zwischen Prozessor und Speicher umfassen. Die White-List kann modifizierbar sein und manuell über ein Eingabemodul der Datenverarbeitungsanlage und/oder über einen Fernzugriff, wie beispielsweise über eine Netzwerk- oder Internetverbindung, angepasst werden. Hierdurch können bedarfsgerecht Anpassungen bzw. Ergänzungen oder Streichungen an der White-List vorgenommen werden oder konzeptionelle Änderungen an der Logik und/oder dem Algorithmus der White-List durchgeführt werden.

Grundsätzlich ist erfindungsgemäß mit Relevanz jegliche Unterscheidbarkeit zwischen mindestens zwei elektronischen Nachrichten zu verstehen, wobei die eine elektronische Nachricht für eine weiterführende Analyse interessant und die andere Nachricht hingegen uninteressant ist. Zu welchem Zweck die interessante Nachricht letztlich verwendet wird oder welche konkreten Inhalte sie aufweist, ist erfindungsgemäß nicht festgelegt.

Die Nachricht kann für jede analytischen, statistischen oder sonstigen Zwecke für eine Weiterverarbeitung von Interesse sein. Erfindungsgemäß stellt die Relevanz bzw. die angelegte White-Liste lediglich auf eine Unterscheidbarkeit von elektronischen Nachrichten ab, wobei die relevanten bzw. interessanten elektronischen Nachrichten zu einer Untergruppe der Gesamtheit der elektronischen Nachrichten gehören, welche zumindest eine Gemeinsamkeit, beispielsweise in Form von Informationen zum Kaufverhalten des Empfängers der elektronischen Nachricht, aufweist. Die White-List kann weiterhin mit dem Betreffzeilen-Text, dem Header der elektronischen Nachricht und/oder dem Textkörper der selbigen abgeglichen werden. Der Header enthält insbesondere Informationen zum Absender und zum Empfänger der elektronischen Nachricht, zu dem Server, von welchem die mindestens eine elektronische Nachricht gesendet wurde, zu den Servern über welche die elektronische Nachricht geleitet wurde sowie zu dem Server, auf welchem die elektronische Nachricht im Posteingang des E-Mail-Accounts des Empfängers, also insbesondere des Benutzers, Teilnehmers bzw. Verbrauchers, eingeht. Die Informationen, welche in dem Header enthalten sind, gehen über die aufgeführten Informationen hinaus, wobei der Fachmann weiß, wozu ein Header vorgesehen ist und welche Informationen in sonstiger Weise aus diesem lesbar sind. Grundsätzlich kann jegliche Information, welche in dem Header der elektronischen Nachricht abgelegt ist, für einen Abgleich Beziehung seine Analyse mittels der White-List herangezogen werden.

Erfindungsgemäß ist der Textkörper die eigentliche Nachricht an den Empfänger der elektronischen Nachricht. Nach der vorliegenden Erfindung umfasst der Textkörper der empfangenen Nachricht auch jegliche Anhänge in Form von Dateien, wie sie üblicherweise mit einer E-Mail übermittelt werden. Diese Anhänge können beispielsweise eine Rechnung zu einem gekauften Produkt oder sonstige für eine Marktanalyse relevanten Informationen enthalten.

Erfindungsgemäß ist mit einer Übereinstimmung nicht lediglich eine wortwörtliche Übereinstimmung zwischen einer Liste, also beispielsweise der White-List, und einem Inhalt der mindestens einen elektronischen Nachricht zu verstehen. Darüber hinausgehend kann eine Übereinstimmung auch jede andere mit der White-List in Korrelation gebrachte Information in der elektronischen Nachricht sein.

Nach der vorliegenden Erfindung soll mit Empfänger grundsätzlich der Empfänger der elektronischen Nachricht gemeint sein. Dieser wird im Rahmen der Erfindung auch als Verbraucher, Benutzer oder Teilnehmer, insbesondere einer Marktforschungsstudie, bezeichnet.

Das Senden einer Übermittlungsanfrage ist vorzugsweise durch das Darstellen der selbigen auf einer Datenverarbeitungseinrichtung mit erfindungsgemäßem Computerprogrammprodukt, also derselben Einrichtung, verwirklicht, auf welcher der Abgleich mit der White-List stattfindet. Hierfür können insbesondere Anzeigemittel, wie beispielsweise ein Bildschirm, verwendet werden. Grundsätzlich kann jeweils eine Übermittlungsanfrage pro elektronische Nachricht mit Übereinstimmung gesendet beziehungsweise dargestellt werden.

Das erfindungsgemäße Verfahren ist bereits durch die Verarbeitung einer einzigen elektronischen Nachricht gemäß dem Wortlaut des Anspruchs 1 verwirklicht. Üblicherweise ist jedoch davon auszugehen, dass der Empfänger der mindestens einen elektronischen Nachricht mehrere Nachrichten erhält, welche bei Empfang auf einem Posteingangsserver des E-Mailproviders, welcher insbesondere ein Internet-Server sein kann, abgelegt werden. Handelt es sich also bei der Nachricht um eine E-Mail wird die Nachricht vorzugsweise von dem Server bezogen, auf welchem die elektronische Nachricht eingegangen ist. Ergänzend oder alternativ hierzu kann die elektronische Nachricht auch von einem E-Mailclient, welcher lokal beispielsweise auf einem Computer, einem Tablet oder einem Smartphone des Empfängers installiert ist, bezogen werden. Die erfindungsgemäße Übermittlung einer Nachricht mit Übereinstimmung an einen Server kann insbesondere das Bereitstellen der elektronischen Nachricht an das Marktforschungsunternehmen darstellen. Da Marktforschungsanalysen grundsätzlich computergestützt vorgenommen werden können, kann der Server, an welchen die Nachricht mit Übereinstimmung übermittelt wird, eine Datenverarbeitungseinrichtung derjenigen Partei sein, welche sich für die Daten des Empfängers der elektronischen Nachrichten interessiert. Dies ist vorzugsweise ein Marktforschungsunternehmen. Grundsätzlich kann eine Datenverarbeitungseinrichtung jede beliebige Einrichtung sein, welche zumindest mit einem datenverarbeitenden Prozessor und einer Speichereinrichtung zum Speichern von Daten ausgebildet ist, wobei die Speichereinrichtung vorzugsweise mit dem Prozessor datenverbunden ist. Vorzugsweise handelt es sich bei der Datenverarbeitungseinrichtung um einen Server, einen Computer, ein Tablet oder ein Smartphone. Grundsätzlich kann die bezogene Nachricht eine beliebige elektronische Nachricht sein. Besonders bevorzugt ist es, dass die elektronische Nachricht eine E-Mail, eine SMS, ein elektronisches Einschreiben, eine Push-Nachricht, eine dargestellte Homepage oder der Inhalt eines Popup-Browserfensters ist. Sofern die Nachricht bezogen werden kann oder das Gerät, welches für das Verfahren verwendet wird, grundsätzlich ausgebildet ist, die elektronische Nachricht zu empfangen, wie beispielsweise bei einer SMS auf einem Smartphone, ist das Verfahren nicht auf eine bestimmte Plattform beschränkt. Dem Fachmann ist klar, dass ein Beziehen der Nachricht von einem Server, insbesondere einem Posteingangsserver, im Falle einer SMS, einer Push-Nachricht, einer dargestellten Homepage oder dem Inhalt eines Popup-Browserfensters nicht erforderlich ist, weswegen bei solchen Nachrichten das erfindungsgemäße Verfahren beziehungsweise das System den Schritt überspringt, in welchem die Nachricht geladen wird. Vielmehr wird in einem solchen Fall das Eingehen beziehungsweise Auftreten der Nachricht auf der Datenverarbeitungseinrichtung, auf welcher das erfindungsgemäße Verfahren ausgeführt wird, registriert und sodann mit dem Abgleich mit der White-List beziehungsweise mit dem Bit benutzerdefinierten Weiterleitungsregeln begonnen.

Besonders bevorzugt ist es, dass der mindestens eine Teil der mindestens einen Nachricht, insbesondere mindestens eines von Sender, Betreffzeilen-Text, Header und/oder Textkörper ist. Grundsätzlich sind das Verfahren bzw. der Abgleich der White-List mit der elektronischen Nachricht nicht auf einen bestimmten Teil der elektronischen Nachricht beschränkt. Jeglicher Bestandteil der Nachricht, welcher geeignet ist, Auskunft über den Sender, den Empfänger und/oder den Inhalt der elektronischen Nachricht bereitzustellen, kann für den Abgleich mit der White-List herangezogen werden.

Nach einer zweckmäßigen Weiterbildung der vorliegenden Erfindung ist vorgesehen, dass mindestens eines von dem Abgleich der mindestens einen Nachricht mit der White-List, dem Senden der Übermittlungsanfrage und/oder dem Übermitteln der Nachricht an einen Server mittels eines entsprechend ausgebildeten Computerprogrammprodukts auf einer Datenverarbeitungsanlage erfolgt. Grundsätzlich kann die Datenverarbeitungsanlage ausgebildet sein, elektronische Nachrichten zu empfangen und/oder zu versenden. Das Computerprogrammprodukt kann Programmcode-Mittel aufweisen, mittels welcher zumindest eines, vorzugsweise jedes, der erfindungsgemäßen Verfahrensschritte durchführbar ist. Insbesondere für die Übernahme von mindestens einem Verfahrensschritt des erfindungsgemäßen Verfahrens durch ein Computerprogrammprodukt kann es zweckmäßig sein, dass die Nachricht mittels des Computerprogrammprodukts auf die Datenverarbeitungsanlage, insbesondere auf einem Computer, Tablet oder Smartphone, geladen wird. Ebenfalls kann das Computerprogrammprodukt alternativ oder ergänzend dazu ausgebildet sein, die mindestens eine elektronische Nachricht von der Datenverarbeitungsanlage an den Server zu übermitteln.

Für das Beziehen der elektrischen Nachricht sowie das Übermitteln der elektronischen Nachricht an den Server können verschiedene Module bzw. Protokolle verwendet werden. Diese sind beispielsweise POP3, IMAP, Microsoft Exchange oder oder ein sonstiges (proprietäres) Protokoll, welches den Zugriff auf E-Maildaten ermöglicht. Der Abruf ist grundsätzlich auch über eine API-Strickschnittstelle des Mailanbieters oder eines anderen Anbieters möglich. Die aktuell gängigsten Protokolle für den Abruf sind POP3 (Post Office Protocol 3) auf Port 110 und 995 (je nach Verschlüsselungstyp) und IMAP (Internet Message Access Protocol) auf Port 143 oder 993 (je nach Verschlüsselungstyp). Letztendlich können die Ports aber von jedem Serveranbieter (E-Maildienstanbieter) beliebig gesetzt werden.

Nach einer Weiterbildung der vorliegenden Erfindung ist es zweckmäßig, dass für das Beziehen der mindestens einen Nachricht eine Benutzerkennung erforderlich ist, welche in dem Computerprogrammprodukt beziehungsweise in der Datenverarbeitungsanlage hinterlegbar ist. Da es sich bei der Datenverarbeitungsanlage vorzugsweise um ein Gerät des Empfängers der elektronischen Nachricht handelt, werden durch das Hinterlegen einer Benutzerkennung auf der Datenverarbeitungsanlage beziehungsweise in dem Computerprogrammprodukt keinerlei Informationen an Dritte übermittelt. Dies kann dem Schutze der Privatsphäre des Empfängers der elektronischen Nachricht zuträglich sein. Wird die Benutzerkennung nicht hinterlegt, kann ein Zugriff auf den zur Kennung gehörigen E-Mailaccount auf dem Posteingangsserver verhindert sein. Handelt es sich bei der elektronischen Nachricht um eine andere Nachricht als eine E-Mail, kann das Hinterlegen einer Benutzerkennung obsolet sein. Insbesondere hinsichtlich elektronischer Nachrichten in Form von SMS, Popups, hinter dargestellten Internet-Browsern oder Ähnlichem kann ein Zugriff auf die Nachricht bereits ohne Kennung erfolgen. Das Computerprogrammprodukt kann dazu ausgebildet sein, entsprechend übermittelte Nachrichten hinsichtlich der voranstehend genannten Kriterien zu überprüfen (White-List).

Weiterhin ist es vorteilhaft, dass beim Senden der Übermittlungsanfrage eine bedienbare Abfrage dargestellt wird, mittels welcher die Übermittlungserlaubnis erteilt oder verweigert wird. Es kann somit neben der Limitierung des Zugriffs auf die elektronischen Nachrichten durch eine entsprechende Kennung zusätzlich oder alternativ hierzu eine Begrenzung der Weiterleitung der elektronischen Nachrichten an den Server dadurch erreicht werden, dass eine Einzelübermittlungserlaubnis durch den Empfänger der Nachricht erteilt werden muss, bevor eine Weiterleitung an den Server erfolgt. Ist die Übermittlungserlaubnis erteilt, wird die elektronische Nachricht von der Datenverarbeitungsanlage mit Computerprogrammprodukt, vorzugsweise von dem Computer, dem Tablet oder dem Smartphone des Empfängers der Nachricht an den Server übermittelt.

Die Weitergabe der ausgewählten (qualifizierten beziehungsweise übereinstimmenden) E-Mails beziehungsweise der elektronischen Nachrichten kann grundsätzlich per SMTP (simple mail transfer protocol), in Datenträgerform oder durch einen Transfer der Datendatei erfolgen, z. B. mittels API (application programming interface), ftp (file transfer protocol), samba oder einem sonstigen Protokoll, welches Datentransfers unterstützt. Samba ist ein freies Programmpaket, das es ermöglicht, Windows-Funktionen wie die Datei- und Druckdienste unter anderen Betriebssystemen zu nutzen und die Rolle eines Domain Controllers anzunehmen. Die Weiterleitung der Nachricht an den Server muss demnach grundsätzlich kein direktes Weiterleiten mittels einer Datenleitung sein. Grundsätzlich kann das Computerprogrammprodukt die Weitergabe mittels Transfer über eine Rest-API-Schnittstelle unterstützen.

Besonders zweckmäßig ist es nach einer Weiterbildung der Erfindung, dass in dem Computerprogrammprodukt Regeln hinterlegt werden, mittels welcher eine Weiterleitung der mindestens einen Nachricht, in Abhängigkeit von mindestens einem Sender, Betreffzeilen-Text, Header und/oder Textkörper, automatisierbar ist. Sollte der Empfänger der elektronischen Nachricht die grundsätzliche Weiterleitung einer (Unter-) Gruppe von elektronischen Nachrichten an den Server wünschen, kann dieser mindestens eine Regel in dem Computerprogrammprodukt hinterlegen, mittels welcher die Abfrage einer Übermittlungserlaubnis übersprungen wird und bei entsprechender Übereinstimmung zwischen elektronischer Nachricht und Regel eine automatisierte Weiterleitung an den Server durchgeführt wird. Beispielsweise kann es wünschenswert sein, alle Nachrichten von einem bestimmten Absender grundsätzlich für eine Übermittlung an den Server freizugeben. Dementsprechend ist eine Regel definierbar, dass elektronische Nachrichten von einem oder mehreren spezifischen Absendern grundsätzlich an den Server weiterleitet geleitet werden können und für diese elektronischen Nachrichten keine Anfrage für eine Übermittlungserlaubnis ausgegeben werden soll. Grundsätzlich können die Regeln mit einem beliebigen Teil der elektronischen Nachricht korrelieren und somit eine automatisierte Weiterleitung der elektronischen Nachricht an den Server ermöglichen. Insbesondere kann eine Regel definiert werden, welche eine automatisierte Weiterleitung in Abhängigkeit von dem Absender (Sender), vom Inhalt des Betreffzeilen-Textes, des Headers und/oder des Textkörpers oder einer Kombination hiervon ermöglicht. Die Regeln können so definiert werden, dass grundsätzlich alle elektronischen Nachrichten mit Übereinstimmung mit der White-List an den Server übermittelt werden oder dass lediglich ein Teil der empfangenen elektronischen Nachrichten automatisch an den Server übermittelt wird, wobei hinsichtlich der übrigen elektronischen Nachrichten weiterhin eine Erteilung der Übermittlungserlaubnis angefordert wird, um an den Server übermittelt werden zu können.

Weiterhin ist erfindungsgemäß ein Computerprogramm mit Programmcode-Mitteln beansprucht, welche ausgebildet sind, die Verfahrensschritte des erfindungsgemäßen Verfahrens, insbesondere nach einem beliebigen/jeden der Ansprüche 1 bis 8 durchzuführen, wenn das Programm auf einem Computer ausgeführt wird. Insbesondere wird ein Computerprogramm beansprucht, das Befehle umfasst, die bei der Ausführung des Programms durch einen Computer diesen veranlassen, das Verfahren beziehungsweise die Schritte des Verfahrens nach einem der Ansprüche 1 bis 8 auszuführen. Der Computer kann jede beliebige Datenverarbeitungsanlage sein, wie sie erfindungsgemäß definiert ist. Bevorzugt ist die Datenverarbeitungsanlage, auf welcher das erfindungsgemäße Computerprogramm gespeichert ist, eine andere als der Server, an welchen die Nachricht oder Daten des Empfängers nach Erteilung einer Übermittlungserlaubnis gesendet werden. Als Computerprogramm wird erfindungsgemäß vorzugsweise das geladene und auf dem Prozessor ausgeführte Computerprogramm bezeichnet.

Ebenfalls ist erfindungsgemäß ein Computerprogrammprodukt mit Programmcode-Mitteln beansprucht, die auf einem computerlesbaren Speichermedium gespeichert sind und ausgebildet sind, das erfindungsgemäße Verfahren, insbesondere nach einem beliebigen/jeden der Ansprüche 1 bis 8, durchzuführen, wenn das Computerprogrammprodukt auf einem Computer ausgeführt wird. Insbesondere wird ein computerlesbares (Speicher-)Medium beansprucht, das Befehle umfasst, die bei der Ausführung durch einen Computer diesen veranlassen, das Verfahren beziehungsweise die Schritte des Verfahrens nach einem der Ansprüche 1 bis 8 auszuführen. Das Computerprogrammprodukt kann insbesondere die auf einem computerlesbaren Speichermedium abgespeicherten Programmcode-Mittel aufweisen.

Das erfindungsgemäße System ist dadurch gekennzeichnet, dass mindestens eine Datenverarbeitungsanlage mit einem Prozessor und einem prozessorverbundenen Speicher, insbesondere ein Computer, ein Tablet oder ein Smartphone, vorgesehen ist, wobei die Datenverarbeitungsanlage ausgebildet ist, die mindestens eine elektronische Nachricht zu empfangen, dass ein Computerprogrammprodukt insbesondere in dem Speicher der Datenverarbeitungsanlage vorgesehen ist, welches insbesondere beim Ausführen so ausgebildet ist, die mindestens eine empfangene Nachricht mit einer White-List abzugleichen, wobei ein Teil der mindestens einen Nachricht, insbesondere mindestens eines von Sender, Betreffzeilen-Text, Header und/oder Textkörper, für den Abgleich verwendbar ist, dass das Computerprogrammprodukt ausgebildet ist, eine Übereinstimmung oder Nicht-Übereinstimmung der mindestens einen empfangenen Nachricht mit der White-List festzustellen, dass die Datenverarbeitungsanlage mit Mitteln zur Darstellung einer Übermittlungsanfrage des Computerprogrammprodukts ausgebildet ist, dass die Datenverarbeitungsanlage mit Eingabemitteln zur Erteilung oder Verweigerung einer Übermittlungserlaubnis bezüglich der mindestens einen übereinstimmenden Nachricht ausgebildet ist und dass das System eine Einrichtung aufweist, mittels welcher nach Erteilung der Übermittlungserlaubnis die mindestens eine übereinstimmende Nachricht an einen Server übermittelbar ist.

Insbesondere werden erfindungsgemäß eine Vorrichtung beziehungsweise ein System zur Datenverarbeitung beansprucht, welche Mittel zur Ausführung des Verfahrens nach einem der Ansprüche 1 bis 8 umfassen.

Besonders bevorzugt werden erfindungsgemäß eine Vorrichtung beziehungsweise ein System zur Datenverarbeitung beansprucht, welche einen Prozessor umfassen, der so angepasst beziehungsweise konfiguriert ist, dass er das Verfahren nach einem der Ansprüche 1 bis 8 ausführt.

Ein weiterer Grundgedanke der vorliegenden Erfindung besteht darin, ein System bereitzustellen, welches ausgebildet ist, elektronische Nachrichten zu empfangen, diese insbesondere durch Abgleich mit einer White-List zu kategorisieren und elektronische Nachrichten, welche den Auswahlkriterien der White-List entsprechen, einem Benutzer des Systems zur Weiterleitung an einen Server vorzulegen. Aufgrund einer nachträglichen Auswahl des Benutzers aus den zur Weiterleitung vorgelegten elektronischen Nachrichten sind die ausgewählten also autorisierten Nachrichten zur Weiterleitung an einen Server freigegeben. Das System ist ausgebildet, die freigegebenen elektronischen Nachrichten an einen Server zu übermitteln, welcher vorzugsweise ausgebildet ist, aus der Summe von elektronischen Nachrichten des Benutzers ein Profil, insbesondere ein Verhaltensprofil beziehungsweise ein Profil zum Kaufverhalten, zu generieren, welches beispielsweise für Marktanalyseforschungen verwendbar ist.

Grundsätzlich ist das erfindungsgemäße System mit einer Einrichtung zum Empfangen und einer weiteren Einrichtung zum Senden von elektronischen Nachrichten ausgebildet. Die Einrichtung zum Empfangen und zum Senden von elektronischen Nachrichten kann auch ein und dieselbe sein. Details zu den jeweiligen Einrichtungen wurden bereits im Zusammenhang mit bevorzugten Ausführungsformen des erfindungsgemäßen Verfahrens diskutiert.

Vorzugsweise ist das Computerprogrammprodukt auf einem Speicher der Datenverarbeitungsanlage hinterlegt, wobei das Computerprogrammprodukt insbesondere mittels des Prozessors der Datenverarbeitungsanlage ausführbar ist.

Alternativ hierzu kann das Computerprogrammprodukt auch bedarfsgerecht über eine Ferndatenverbindung auf die Datenverarbeitungsanlage geladen werden, wie beispielsweise über eine Netzwerk- oder Internetverbindung. Sollte das Computerprogrammprodukt über eine Ferndatenverbindung geladen werden, kann dennoch teilweise der Speicher der Datenverarbeitungsanlage, insbesondere als Zwischenspeicher, verwendet werden, das Computerprogrammprodukt zu laden und betriebsgerecht zu verwalten. Selbiges gilt für die White-List. Diese kann sowohl lokal hinterlegt sein, als auch mittels Fernabfrage für den Abgleich mit einer empfangenen Nachricht geladen werden.

Die Mittel zur Darstellung der Übermittlungsanfrage, also der Weiterleitungsanfrage, kann insbesondere ein Bildschirm sein, welcher eine Darstellung der Übermittlungsanfrage ermöglicht. Die Eingabemittel der Datenverarbeitungsanlage können insbesondere eine Maus, eine Tastatur o. ä., jedoch auch ein Touchscreen sein. Hierbei können die Mittel zur Darstellung und zur Eingabe in den Touchscreen miteinander verbunden sein.

Nach einer zweckmäßigen Weiterbildung der vorliegenden Erfindung ist es vorgesehen, dass die elektronische Nachricht eine E-Mail, eine SMS, ein elektronisches Einschreiben, eine Push-Nachricht, eine dargestellte Homepage oder der Inhalt eines Popup-Browserfensters ist.

Bevorzugt ist es nach einer Weiterbildung der Erfindung, dass das System mit einer Abfrageeinrichtung ausgebildet ist, mittels welcher die elektronische Nachricht, insbesondere eine E-Mail, von einem Server, insbesondere von einem Posteingangsserver, beziehbar ist. Empfangene E-Mails eines Benutzers sind in der Regel auf einem Posteingangsserver beziehungsweise einem E-Mailserver abgelegt, wobei diese entweder über ein Browserfenster lesbar/aufrufbar sind oder mittels eines E-Mailclients, wie beispielsweise Outlook oder Thunderbird, auf eine gewünschte Datenverarbeitungsanlage, beispielsweise einen Computer, Tablet oder Smartphone, heruntergeladen werden können. Die Abfrageeinrichtung des erfindungsgemäßen Systems kann grundsätzlich ähnlich wie ein E-Mailclient funktionieren, wobei die Zugangsdaten für den Posteingangsserver in der Abfrageeinrichtung beziehungsweise in dem Computerprogrammprodukt oder auf der Datenverarbeitungseinrichtung hinterlegbar sind. Die Abfrageeinrichtung kann grundsätzlich als Teil des Computerprogrammprodukts ausgebildet sein, jedoch auch losgelöst von diesem in der Datenverarbeitungsanlage vorgesehen sein und lediglich mit dem Computerprogrammprodukt im Datenaustausch stehen. Durch eine Abfrage der Abfrageeinrichtung auf dem Posteingangsserver, ob zu einer hinterlegten E-Mailadresse Nachrichten eingegangen sind, können seit der letzten Abfrage neu eingegangene Nachrichten auf die erfindungsgemäße Datenverarbeitungsanlage heruntergeladen werden. Vorzugsweise ist dies insofern ermöglicht, soweit die Benutzerkennung (Benutzername/E-Mail und Passwort), welche zu dem entsprechenden Posteingangsserver/E-Mailadresse gehört, in der Abfrageeinrichtung oder dem Computerprogrammprodukt hinterlegt ist.

Besonders bevorzugt ist es nach einer Weiterbildung der Erfindung, dass der Zugriff des Systems auf den Posteingangsserver durch eine Kennung, insbesondere durch einen Benutzernamen und ein Passwort, beschränkt ist, welche vorzugsweise in der Datenverarbeitungsanlage, insbesondere in dem Computerprogrammprodukt hinterlegbar ist. Ohne die zugehörige Kennung zu dem persönlichen Posteingangsserver ist ein Zugriff auf die E-Mails einer Person in der Regel nicht möglich. Da es aus Sicherheitsgründen unüblich ist, seine individuelle Kennung an Dritte weiterzugeben, ist es erfindungsgemäß vorgesehen, dass die Kennung lokal auf der Datenverarbeitungsanlage beziehungsweise dem Computerprogrammprodukt/der Abfrageeinrichtung des jeweiligen Inhabers des Posteingangsservers, also dem Benutzer, hinterlegt ist. Sowohl Passwort als auch Benutzername können somit auf einem persönlichen Datenverarbeitungsgerät, wie einem Computer, Tablet oder Smartphone, abgelegt werden, wodurch die Abfrageeinrichtung beziehungsweise das Computerprogrammprodukt in die Lage versetzt werden, E-Mails dieser Person passend zu der hinterlegten Kennung abzurufen. Demnach ist es erfindungsgemäß nicht zwingend erforderlich, die persönliche Kennung für einen Posteingangsserver an Dritte zu übermitteln, um das erfindungsgemäße Verfahren, das System beziehungsweise das Computerprogramm(-produkt) zu nutzen. Die empfangenen/geladenen Nachrichten werden dann durch einen Abgleich mit der White-List nach solchen elektronischen Nachrichten durchsucht, welche der White-List entsprechen und/oder zu den Auswahlregeln der White-List passen. Diese werden anschließend dem Benutzer für eine Freigabe zur Übermittlung an einen Server dargestellt.

Besonders bevorzugt ist es nach einer Weiterbildung der Erfindung, dass das Systems ausgebildet ist, anhand von definierbaren Übermittlungsregeln beziehungsweise Weiterleitungsregeln eine Übermittlung von elektronischen Nachrichten an den Server zu ermöglichen, wobei die Erteilung der Übermittlungserlaubnis durch die definierbare Regel ersetzbar ist. Üblicherweise verwenden Benutzer bei ihren Aktivitäten im Internet regelmäßig wiederkehrende Plattformen (Amazon, Ebay, Alibaba,...).

Mit diesen Plattformen besteht in der Regel auch über elektronische Nachrichten, wie beispielsweise E-Mails, regelmäßiger Kontakt. Dies ist insbesondere bei den großen bekannten online-Shopping-Plattformen der Fall. Sollte der Benutzer, auf dessen Datenverarbeitungsanlage das Computerprogrammprodukt nach der vorliegenden Erfindung installiert ist, dies wünschen, kann dieser durch Aufstellen entsprechender Regeln die Weiterleitung von elektronischen Nachrichten an den Server automatisieren. Hierzu kann beispielsweise eine E-Mail-Adresse, ein bestimmter Inhalt oder ein Thema der elektronischen Nachrichten oder eine sonstige Regel, welche geeignet ist, elektronische Nachrichten voneinander zu unterscheiden, definiert werden. Alle elektronischen Nachrichten, welche der Regel entsprechen, können ohne weitere Erteilung einer Übermittlungserlaubnis direkt an den Server übermittelt werden. Grundsätzlich sind diese Regeln reversibel vorsehbar und können nach Belieben eingeschaltet, ausgeschaltet, ergänzt oder gelöscht werden. Die benutzerdefinierten Regeln können alternativ oder ergänzend zu der White-List vorgesehen werden und grundsätzlich vor oder nach einem Abgleich der Nachrichten mit der White-List auf die Nachrichten angewendet werden.

Nachfolgend wird die Erfindung anhand eines bevorzugten Ausführungsbeispiels weiter erläutert. In den Zeichnungen zeigt:

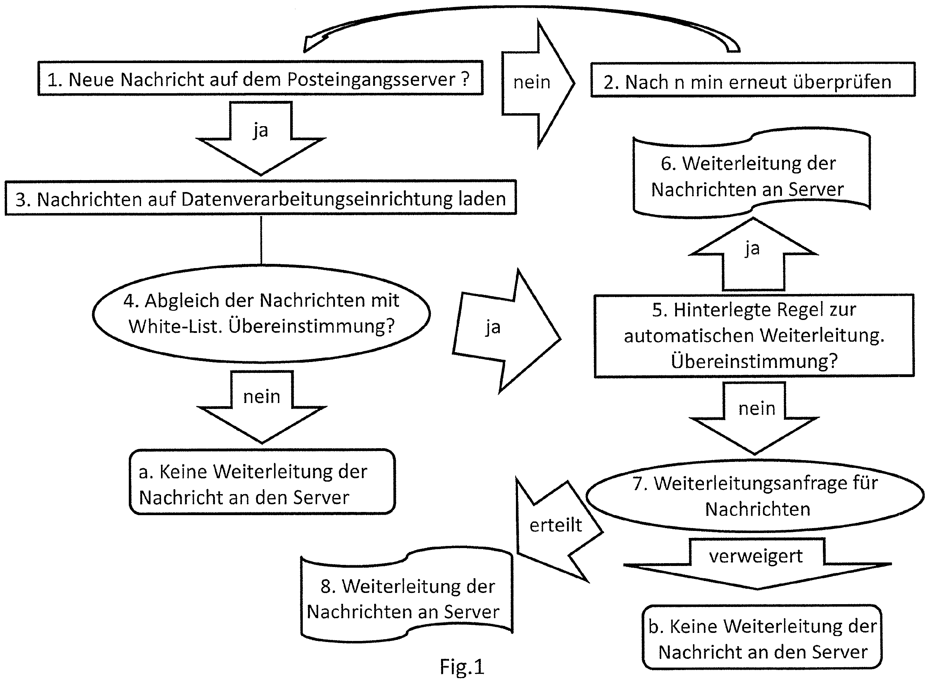

- Fig. 1: eine schematische Darstellung des erfindungsgemäßen Verfahrens einer bevorzugten Ausführungsform.

Figur 1 zeigt schematisch die einzelnen Schritte des erfindungsgemäßen Verfahrens nach einer bevorzugten Ausführungsform. Grundsätzlich können einzelne Schritte des Verfahrens übersprungen oder ausgelassen werden, soweit dies dem Wesen der Nachricht entspricht. So kann beispielsweise das Laden einer Nachricht von einem Posteingangsserver obsolet sein, wenn es sich um eine SMS, ein Internetbrowserfenster, ein Popup-Fenster eines Internetbrowsers oder eine Push-Nachricht handelt. Als Push-Nachrichten werden Nachrichten bezeichnet, bei denen der Informationsfluss vom Sender gesteuert wird und der Kommunikationsfluss primär in einer Richtung (unidirektional) vom Sender zum Empfänger verläuft. Dieser Schritt wird demnach erfindungsgemäß übersprungen, wobei das Beziehen der Nachricht gemäß Anspruch 1 dann das Laden der Nachricht in das Computerprogrammprodukt vor dem Abgleich darstellt. Sollten keine benutzerdefinierten Regeln vorliegen, kann dieser Schritt ebenfalls übersprungen und direkt eine Weiterleitungsanfrage beziehungsweise eine Übermittlungsanfrage dargestellt werden.

Nach dem vorliegenden Ausführungsbeispiel wird davon ausgegangen, dass ein im Sinne der vorliegenden Erfindung definierter Benutzer eine Datenverarbeitungsanlage verwendet, auf welcher ein Computerprogrammprodukt ausführbar ist, mittels welchem die erfindungsgemäßen Verfahrensschritte gemäß Figur 1 durchführbar sind. Grundsätzlich ist jede Datenverarbeitungsanlage dazu geeignet, mittels des erfindungsgemäßen Computerprogrammprodukts die vorliegende Erfindung auszuführen. Vorzugsweise handelt es sich jedoch dabei um einen Computer, ein Tablet oder ein Smartphone. Bei dem Computerprogrammprodukt kann es sich insbesondere im Fall des Tablets oder des Smartphones um eine sogenannte App handeln, welche für mobile Anwendungen optimiert ist. Das Computerprogrammprodukt ist hierbei auf einem Speicher der Datenverarbeitungsanlage hinterlegbar und insbesondere mittels des Prozessors der Datenverarbeitungsanlage ausführbar. Der Fachmann versteht, dass das Computerprogrammprodukt die erfindungsgemäßen Verfahrensschritte nur dann vollziehen kann, wenn dieses aktiviert beziehungsweise geladen also einsatzbereit ist.

Nach einem ersten Verfahrensschritt nach der bevorzugten Ausführungsform in Figur 1 wird zunächst das Vorliegen einer elektronischen Nachricht, insbesondere einer E-Mail, auf einem Posteingangsserver überprüft. Hierfür wurden Zugangsdaten zu mindestens einem Posteingangsserver für elektronische Nachrichten, insbesondere E-Mails, vorzugsweise in dem Computerprogrammprodukt hinterlegt. Grundsätzlich ist das Verfahren geeignet, auch elektronische Nachrichten von mehreren Posteingangsservern zu verwalten und zu empfangen. Sollte keine neue Nachricht seit der letzten Überprüfung eingetroffen sein, wird der Befehl für eine erneute Überprüfung nach einer bestimmten Zeit, insbesondere nach 1 Minute, 5 Minuten, 10 Minuten, 30 beziehungsweise 60 Minuten, hinterlegt (Verfahrensschritt 2). Konnte mindestens eine neue Nachricht auf dem(den) Posteingangsserver(n), zu welchem(n) Zugangsdaten hinterlegt wurden, identifiziert werden, wird die mindestens eine Nachricht zur weiteren Bearbeitung von dem Posteingangsserver heruntergeladen. Gleichermaßen kann beim oder nach dem Abruf der neuen Nachrichten ein Befehl im Sinne des Verfahrensschritts 2 hinterlegt werden, wodurch nach einer vorbestimmten Zeit (n min) eine weitere Abfrage durchführbar ist. Ergänzend oder alternativ hierzu kann eine Eingangsbenachrichtigung durch den Posteingangsserver ergehen, sobald eine Nachricht auf dem Posteingangsserver eingegangen ist.

Grundsätzlich kann das sogenannte "aktive polling", also das Abfragen des Posteingangsservers, beispielsweis über ein POP3 Protokoll durchgeführt werden. Soll hingegen das Verfahren auf Grund einer Eingangsbenachrichtigung von dem Posteingangsserver durchgeführt werden, kann mittels eines "hintergrund pollings" beispielsweise eine konstante Verbindung zwischen Computerprogrammprodukt und Posteingangsserver bestehen oder über eine sogenannte "push notification" das Computerprogrammprodukt über den Eingang einer Nachricht auf dem Posteingangsserver informiert werden.

Erfindungsgemäß kann vor einem Herunterladen einer Nachricht auf eine entsprechende Eingangsbenachrichtigung gewartet werden. Die elektronische Nachricht kann insbesondere in einen Speicher der Datenverarbeitungseinrichtung beziehungsweise in das Computerprogrammprodukt auf der Datenverarbeitungseinrichtung, insbesondere ein Modul des Computerprogrammprodukts, geladen werden (Verfahrensschritte 3).

Das Computerprogrammprodukt hat Zugriff auf eine sogenannte White-List, welche eine Liste, Anhaltspunkte und/oder einen Algorithmus aufweisen kann, mittels welcher insbesondere der Sender, der Betreffzeilen-Text, der Header und/oder der Textkörper der elektronischen Nachricht auf seine Relevanz überprüft wird. Die Relevanz einer Nachricht leitet sich maßgeblich vom Inhalt der Nachricht beziehungsweise seinem Absender ab. Da das erfindungsgemäße Verfahren insbesondere für marktanalytische Zwecke verwendet werden kann, kann die White-List insbesondere Möglichkeiten zur Identifizierung des Absenders als Betreiber eines Onlineshops, beziehungsweise eines beliebigen anderen Onlineangebots und/oder Möglichkeiten zur Identifizierung des Inhalts der Nachricht, beispielsweise in Form einer Rechnung eines gekauften Produkts oder eines Online- oder Offlinedienstes, aufweisen. Nach einer besonders bevorzugten Ausführungsform weist die White-List eine Sammlung von für eine Analyse interessanten E-Mail-Adressen von Onlinehändlern auf. Dabei kann ein Interesse an der Information über gekaufte Produkte von den zu den E-Mailadressen gehörigen Onlineshops, des Benutzers des erfindungsgemäßen Verfahrens bestehen. Mit jedem Online-Einkauf werden regelmäßig eine Kaufbestätigung, ein Versandhinweis, eine Rechnung und/oder eine sonstige Kommunikation von dem Verkäufer an den Käufer, im vorliegenden Fall den Benutzer, übermittelt.

Die White-List kann entweder als Teil des Computerprogrammprodukts ausgebildet und an demselben Ort abgespeichert sein wie das Computerprogrammprodukt. Alternativ kann das Computerprogrammprodukt die White-List jedoch auch bedarfsgerecht über eine Datenfernverbindung beziehen, wobei die White-List auf einem Server hinterlegbar ist. Dies kann insbesondere hinsichtlich Aktualisierungen der White-List beziehungsweise ihrer Pflege und/oder Modifizierung von Vorteil sein. Sollte der Abgleich mit der White-List keine Übereinstimmung (Liste), keinen Hinweis auf die Relevanz der elektronischen Nachricht (Anhaltspunkte in der Nachricht) und/oder in einem sonstigen Sinne zu keinem positiven Feedback (Algorithmus) führen (Verfahrensschritt 4), wird keine Weiterleitung der Nachricht an einen Server durchgeführt (Verfahrensschritt a). Liegt hingegen eine Übereinstimmung vor, kann ein Abgleich mit benutzerdefinierten Weiterleitungsregeln durchgeführt werden (Verfahrensschritte 5). Dieser Schritt ist optional und wird vorzugsweise nur dann durchgeführt, wenn eine benutzerdefinierte Regel hinterlegt wurde.

Die benutzerdefinierten Weiterleitungsregeln können in dem Computerprogrammprodukt hinterlegt sein, jedoch grundsätzlich in derselben Weise zur Verfügung gestellt werden, wie voranstehend für die White-List beschrieben. Hierbei können beispielsweise Regeln hinsichtlich des Absenders der elektronischen Nachricht, des Inhalts der elektronischen Nachricht, Betreffzeilen-Text, Header und Textkörper jedoch auch hinsichtlich des verwendeten Posteingangsservers (Empfänger E-Mail-Adresse) definiert werden. So kann beispielsweise eine automatische Weiterleitung von Nachrichten eines bestimmten Posteingangsservers grundsätzlich gestattet werden, wohingegen für einen anderen hinterlegten Posteingangsserver eine einzelne Erteilung der Weiterleitungsanfrage erforderlich bleibt. Diese Regeln ermöglichen die Weiterleitung von elektronischen Nachrichten, welche geladen wurden ohne weitere Eingriffe durch einen Benutzer in das Verfahren (Verfahrensschritte 6). Man kann demnach von einer automatisierten Weiterleitung aufgrund von benutzerdefinierten Regeln sprechen.

Alternativ zu diesem Vorgehen kann grundsätzlich vor einem Abgleich der Nachricht mit einer White-List auch zuerst die Anwendung der benutzerdefinierten Weiterleitungsregeln auf geladene Nachrichten erfolgen und lediglich die übrigen Nachrichten, welche nach der Anwendung der benutzerdefinierten Regeln noch nicht an den Server übermittelt wurden, mit einer White-List abgeglichen werden. Besteht hinsichtlich der mindestens einen Nachricht keine Übereinstimmung mit den benutzerdefinierten Weiterleitungsregeln (Verfahrensschritte 5) oder wurde dieser Schritt übersprungen, wird auf einem entsprechenden Anzeigemittel eine Weiterleitungsanfrage, also eine Übermittlungsanfrage, generiert und vorzugsweise auf einem Anzeigemittel für den Benutzer dargestellt. Wird die Weiterleitungsanfrage verweigert, wird keine Weiterleitung der Nachricht an den Server durchgeführt (Verfahrensschritt b). Wird die Weiterleitungsanfrage freigegeben beziehungsweise erteilt, wird die mindestens eine Nachricht an den Server weitergeleitet.

Es ist darauf hinzuweisen, dass beim Vorliegen mehrerer Nachrichten jede einzelne der Nachrichten in den einzelnen Filtern gemäß den Verfahrensschritten 4, 5 und 7 "hängenbleiben" kann. Dies bedeutet, dass sich die Anzahl der geladenen Nachrichten durch den Abgleich mit der White-List, durch die Anwendung der benutzerdefinierten Weiterleitungsregeln sowie letztlich durch die Erteilung beziehungsweise Verweigerung der Weiterleitung der Nachrichten an den Server verringern kann, also die einzelnen Nachrichten durch eine der Überprüfungen durchfallen können. Hierdurch kann die Zahl der geladenen Nachrichten auch stark von der Zahl der tatsächlich an den Server weitergeleiteten Nachrichten abweichen. Erfindungsgemäß ist somit ein Verfahren bereitgestellt, welches eine zweifache beziehungsweise dreifache Überprüfung von Nachrichten ermöglicht (je nachdem welche/wie viele der Verfahrensschritte 4, 5 und 7 vorgesehen werden), bevor eine Weiterleitung der Nachrichten an einen Dritten beziehungsweise den Server erfolgen kann. Liegen keine benutzerdefinierten Weiterleitungsregeln vor, wird nach dem Verfahrensschritt 4 direkt mit dem Verfahrensschritt 7 das Verfahren weitergeführt. Es werden demnach alle Nachrichten einer Weiterleitungsanfrage zugeführt, welche eine positive Übereinstimmung mit der White-List aufweisen. Das Erteilen beziehungsweise Verweigern der Weiterleitung gemäß Weiterleitungsanfrage kann beispielsweise über Eingabemittel, wie beispielsweise eine Tastatur, eine Maus oder ein Touchscreen, durch den Benutzer erfolgen. Mit dem Touchscreen sind die Anzeigemittel und Eingabemittel durch dieselbe Vorrichtung verwirklicht. Verweigert der Benutzer die Weiterleitung gemäß der Weiterleitungsanfrage nach Verfahrensschritt 7, wird keine Weiterleitung der Nachricht an den Server vorgenommen (Verfahrensschritt b).

## Patentansprüche

1. Verfahren zur Analyse und Verarbeitung von elektronischen Nachrichten/Daten, **dadurch gekennzeichnet**
**dass** mindestens ein Teil mindestens einer bezogenen Nachricht mit einer White-List abgeglichen wird,
**dass** eine Übereinstimmung oder Nicht-Übereinstimmung der mindestens einen Nachricht mit der White-List festgestellt wird,
**dass** eine Übermittlungsanfrage bezüglich der mindestens einen Nachricht mit Übereinstimmung, insbesondere an den Empfänger der mindestens einen Nachricht, gesendet wird und
**dass** die Nachricht mit Übereinstimmung an einen Server zur weiteren Analyse der Inhalte der Nachricht übermittelt wird, soweit eine Übermittlungserlaubnis erteilt wurde.

2. Verfahren nach Anspruch 1,
**dadurch gekennzeichnet,**
**dass** die elektronische Nachricht eine E-Mail, eine SMS, ein elektronisches Einschreiben, eine Push-Nachricht, eine dargestellte Homepage oder der Inhalt eines Popup-Browserfensters ist.

3. Verfahren nach Anspruch 1,
**dadurch gekennzeichnet,**
**dass** der mindestens eine Teil der mindestens einen Nachricht, insbesondere mindestens eines von Sender, Betreffzeilen-Text, Header und/oder Textkörper ist.

4. Verfahren nach einem der Ansprüche 1 bis 3,
**dadurch gekennzeichnet,**
**dass** mindestens eines von dem Abgleich der mindestens einen Nachricht mit der White-List, dem Senden der Übermittlungsanfrage und/oder dem Übermitteln der Nachricht an einen Server mittels eines entsprechend ausgebildeten Computerprogrammprodukts auf einer Datenverarbeitungsanlage erfolgt.

5. Verfahren nach einem der Ansprüche 1 bis 4,
**dadurch gekennzeichnet,**
**dass** die Nachricht insbesondere mittels des Computerprogrammprodukts auf eine Datenverarbeitungsanlage, insbesondere auf einen Computer, ein Tablet oder ein Smartphone, bezogen wird.

6. Verfahren nach einem der Ansprüche 1 bis 5,
**dadurch gekennzeichnet,**
**dass** für das Beziehen der mindestens einen Nachricht eine Benutzerkennung erforderlich ist, welche in dem Computerprogrammprodukt beziehungsweise der Datenverarbeitungsanlage hinterlegbar ist.

7. Verfahren nach einem der Ansprüche 1 bis 6,
**dadurch gekennzeichnet,**
**dass** beim Senden der Übermittlungsanfrage eine bedienbare Abfrage dargestellt wird, mittels welcher die Übermittlungserlaubnis erteilt oder verweigert wird.

8. Verfahren nach einem der Ansprüche 1 bis 7,
**dadurch gekennzeichnet,**
**dass** in dem Computerprogrammprodukt Regeln hinterlegt werden, mittels welchen eine Weiterleitung der mindestens einen Nachricht in Abhängigkeit von mindestens einem Sender, Betreffzeilen-Text, Header und/oder Textkörper, automatisierbar ist.

9. Computerprogramm mit Programmcode-Mitteln, welche ausgebildet sind, die erfindungsgemäßen Verfahrensschritte, insbesondere nach einem beliebigen der Ansprüche 1 bis 8, durchzuführen, wenn das Programm auf einem Computer ausgeführt wird.

10. Computerprogrammprodukt mit Programmcode-Mitteln, die auf einem computerlesbaren Speichermedium gespeichert sind und ausgebildet sind, das erfindungsgemäße Verfahren, insbesondere nach einem beliebigen der Ansprüche 1 bis 8, durchzuführen, wenn das Computerprogrammprodukt auf einem Computer ausgeführt wird.

11. System zur Analyse und Verarbeitung von mindestens einer elektronischen Nachricht/von Daten mit mindesten einer Datenverarbeitungsanlage mit einem Prozessor und einem prozessorverbundenen Speicher, insbesondere einem Computer, einem Tablet oder einem Smartphone, wobei das Gerät ausgebildet ist, die mindestens eine elektronische Nachricht zu empfangen,
**dadurch gekennzeichnet,**
- **dass** ein Computerprogrammprodukt insbesondere in dem Speicher der Datenverarbeitungsanlage vorgesehen ist, welches insbesondere beim Ausführen ausgebildet ist, die mindestens eine empfangene Nachricht mit einer White-List abzugleichen, wobei zumindest ein Teil der mindestens einen Nachricht, insbesondere mindestens eines von Sender, Betreffzeilen-Text, Header und/oder Textkörper für den Abgleich verwendbar ist,
- **dass** das Computerprogrammprodukt ausgebildet ist, eine Übereinstimmung oder Nicht-Übereinstimmung der mindestens einen empfangenen Nachricht mit der White-List festzustellen,
- **dass** die Datenverarbeitungsanlage mit Mitteln zur Darstellung einer Übermittlungsanfrage des Computerprogrammprodukts ausgebildet ist,
- **dass** die Datenverarbeitungsanlage mit Eingabemitteln zur Erteilung oder Verweigerung einer Übermittlungserlaubnis bezüglich der mindestens einen übereinstimmenden Nachricht ausgebildet ist und
- **dass** das System eine Einrichtung aufweist, mittels welcher nach Erteilung der Übermittlungserlaubnis die mindestens eine übereinstimmende Nachricht an einen Server übermittelbar ist.

12. System nach Anspruch 11
**dadurch gekennzeichnet,**
**dass** die elektronische Nachricht eine E-Mail, eine SMS, ein elektronisches Einschreiben, eine Push-Nachricht, eine dargestellte Homepage oder der Inhalt eines Popup-Browserfensters ist.

13. System nach Anspruch 11,
**dadurch gekennzeichnet,**
**dass** das System mit einer Abfrageeinrichtung ausgebildet ist, mittels welcher die elektronische Nachricht, insbesondere eine E-Mail, von einem Server, insbesondere von einem Posteingangsserver, beziehbar ist.

14. System nach Anspruch 11 oder 13,
**dadurch gekennzeichnet,**
**dass** der Zugriff des Systems auf den Posteingangsserver durch eine Kennung, insbesondere durch einen Benutzernamen und ein Passwort, beschränkt ist, welche vorzugsweise in einer Datenverarbeitungsanlage, insbesondere in dem Computerprogrammprodukt, hinterlegbar ist.

15. System nach einem der Ansprüche 11 bis 14,
**dadurch gekennzeichnet,**
**dass** das Systems ausgebildet ist, anhand von definierbaren Übermittlungsregeln eine Übermittlung von elektronischen Nachrichten an den Server zu ermöglichen, wobei die Erteilung der Übermittlungserlaubnis durch die definierbare Regel ersetzbar ist.

## Geänderte Patentansprüche

### Geänderte Patentansprüche gemäss Regel 137(2) EPÜ.

1. Verfahren zur Analyse und Verarbeitung von elektronischen Nachrichten/Daten,
**dadurch gekennzeichnet**
wobei mindestens eine Nachricht bezogen und mindestens ein Teil der mindestens einen bezogenen Nachricht mit einer White-List abgeglichen wird,
dass eine Übereinstimmung oder Nicht-Übereinstimmung der mindestens einen Nachricht mit der White-List festgestellt wird,
dass eine Übermittlungsanfrage bezüglich der mindestens einen bezogenen Nachricht mit Übereinstimmung, insbesondere an den Empfänger der mindestens einen Nachricht, gesendet wird und
dass die Nachricht mit Übereinstimmung an einen Server zur weiteren Analyse der Inhalte der Nachricht übermittelt wird, soweit eine Übermittlungserlaubnis erteilt, also die Weiterleitung an einen Server jeweils autorisiert wurde.

2. Verfahren nach Anspruch 1,
**dadurch gekennzeichnet,**
**dass** die elektronische Nachricht eine E-Mail, eine SMS, ein elektronisches Einschreiben, eine Push-Nachricht, eine dargestellte Homepage oder der Inhalt eines Popup-Browserfensters ist.

3. Verfahren nach Anspruch 1,
**dadurch gekennzeichnet,**
**dass** der mindestens eine Teil der mindestens einen Nachricht, insbesondere mindestens eines von Sender, Betreffzeilen-Text, Header und/oder Textkörper ist.

4. Verfahren nach einem der Ansprüche 1 bis 3,
**dadurch gekennzeichnet,**
**dass** mindestens eines von dem Abgleich der mindestens einen Nachricht mit der White-List, dem Senden der Übermittlungsanfrage und/oder dem Übermitteln der Nachricht an einen Server mittels eines entsprechend ausgebildeten Computerprogrammprodukts auf einer Datenverarbeitungsanlage erfolgt.

5. Verfahren nach einem der Ansprüche 1 bis 4,
**dadurch gekennzeichnet,**
**dass** die Nachricht insbesondere mittels des Computerprogrammprodukts auf eine Datenverarbeitungsanlage, insbesondere auf einen Computer, ein Tablet oder ein Smartphone, bezogen wird.

6. Verfahren nach einem der Ansprüche 1 bis 5,
**dadurch gekennzeichnet,**
**dass** für das Beziehen der mindestens einen Nachricht eine Benutzerkennung erforderlich ist, welche in dem Computerprogrammprodukt beziehungsweise der Datenverarbeitungsanlage hinterlegbar ist.

7. Verfahren nach einem der Ansprüche 1 bis 6,
**dadurch gekennzeichnet,**
**dass** beim Senden der Übermittlungsanfrage eine bedienbare Abfrage dargestellt wird, mittels welcher die Übermittlungserlaubnis erteilt oder verweigert wird.

8. Verfahren nach einem der Ansprüche 1 bis 7,
**dadurch gekennzeichnet,**
**dass** in dem Computerprogrammprodukt Regeln hinterlegt werden, mittels welchen eine Weiterleitung der mindestens einen Nachricht in Abhängigkeit von mindestens einem Sender, Betreffzeilen-Text, Header und/oder Textkörper, automatisierbar ist.

9. Computerprogramm mit Programmcode-Mitteln, welche ausgebildet sind, die erfindungsgemäßen Verfahrensschritte, insbesondere nach einem beliebigen der Ansprüche 1 bis 8, durchzuführen, wenn das Programm auf einem Computer ausgeführt wird.

10. Computerprogrammprodukt mit Programmcode-Mitteln, die auf einem computerlesbaren Speichermedium gespeichert sind und ausgebildet sind, das erfindungsgemäße Verfahren, insbesondere nach einem beliebigen der Ansprüche 1 bis 8, durchzuführen, wenn das Computerprogrammprodukt auf einem Computer ausgeführt wird.

11. System zur Analyse und Verarbeitung von mindestens einer elektronischen Nachricht/von Daten mit mindesten einer Datenverarbeitungsanlage mit einem Prozessor und einem prozessorverbundenen Speicher, insbesondere einem Computer, einem Tablet oder einem Smartphone, wobei das Gerät ausgebildet ist, die mindestens eine elektronische Nachricht zu empfangen,
**dadurch gekennzeichnet,**
- **dass** ein Computerprogrammprodukt insbesondere in dem Speicher der Datenverarbeitungsanlage vorgesehen ist, welches insbesondere beim Ausführen ausgebildet ist, die mindestens eine empfangene Nachricht mit einer White-List abzugleichen, wobei zumindest ein Teil der mindestens einen Nachricht, insbesondere mindestens eines von Sender, Betreffzeilen-Text, Header und/oder Textkörper für den Abgleich verwendbar ist,
- **dass** das Computerprogrammprodukt ausgebildet ist, eine Übereinstimmung oder Nicht-Übereinstimmung der mindestens einen empfangenen Nachricht mit der White-List festzustellen,
- **dass** die Datenverarbeitungsanlage mit Mitteln zur Darstellung einer Übermittlungsanfrage des Computerprogrammprodukts ausgebildet ist,
- **dass** die Datenverarbeitungsanlage mit Eingabemitteln zur Erteilung oder Verweigerung einer Übermittlungserlaubnis bezüglich der mindestens einen übereinstimmenden Nachricht ausgebildet ist und
- **dass** das System eine Einrichtung aufweist, mittels welcher nach Erteilung der Übermittlungserlaubnis, also nach Autorisierung der Weiterleitung, die mindestens eine übereinstimmende Nachricht an einen Server übermittelbar ist.

12. System nach Anspruch 11
**dadurch gekennzeichnet,**
**dass** die elektronische Nachricht eine E-Mail, eine SMS, ein elektronisches Einschreiben, eine Push-Nachricht, eine dargestellte Homepage oder der Inhalt eines Popup-Browserfensters ist.

13. System nach Anspruch 11,
**dadurch gekennzeichnet,**
**dass** das System mit einer Abfrageeinrichtung ausgebildet ist, mittels welcher die elektronische Nachricht, insbesondere eine E-Mail, von einem Server, insbesondere von einem Posteingangsserver, beziehbar ist.

14. System nach Anspruch 11 oder 13,
**dadurch gekennzeichnet,**
**dass** der Zugriff des Systems auf den Posteingangsserver durch eine Kennung, insbesondere durch einen Benutzernamen und ein Passwort, beschränkt ist, welche vorzugsweise in einer Datenverarbeitungsanlage, insbesondere in dem Computerprogrammprodukt, hinterlegbar ist.

15. System nach einem der Ansprüche 11 bis 14,
**dadurch gekennzeichnet,**
**dass** das Systems ausgebildet ist, anhand von definierbaren Übermittlungsregeln eine Übermittlung von elektronischen Nachrichten an den Server zu ermöglichen, wobei die Erteilung der Übermittlungserlaubnis durch die definierbare Regel ersetzbar ist.
